# FASCICULE DE BREVET EUROPEEN

(11) **EP 3 998 843 B1**
(45) Date de publication et mention de la délivrance du brevet: **02.08.2023**
(21) Numéro de dépôt: 20753428.0
(22) Date de dépôt: 16.07.2020
(51) Int. Cl.: A01B 79/00, A01M 7/00, A01M 9/00, A01M 21/04

(54) **SYSTÈME DE TRAITEMENT DE PLANTES EN AGRICULTURE**
PFLANZENBEHANDLUNGSSYSTEM FÜR LANDWIRTSCHAFTLICHE PFLANZEN
TREATMENT SYSTEM FOR AGRICULTURAL PLANTS

(30) Priorité: 19.07.2019 FR 1908025
(43) Date de publication de la demande: 25.05.2022
(73) Titulaire: Bilberry SAS, 94250 Gentilly (FR)
(72) Inventeur: SERRAT, Hugo, 94250 Gentilly (FR); BEGUERIE, Jules, 94250 Gentilly (FR); ROUCHAUD, Pierre, 94250 Gentilly (FR); STEUNOU, Loïc, 94250 Gentilly (FR)
(74) Mandataire: Le Forestier, Eric
(86) Numéro de dépôt international: PCT/IB2020/056704
(87) Numéro de publication internationale: WO 2021/009710

(56) Documents cités:
- EP-A1- 1 000 540
- WO-A1-2007/008079
- WO-A1-2018/142371
- WO-A1-2018/154490

## Description

### Domaine de l'invention

La présente invention concerne d'une façon générale le domaine du traitement de végétaux dans le domaine agricole.

### Etat de la technique

On connaît déjà notamment par les documents WO2018142371A1 et WO2018154490A1 au nom de la Demanderesse des procédés et systèmes permettant de traiter sélectivement des adventices dans des zones cultivées. Un tel système comprend une rampe de pulvérisation déplacée par un tracteur et équipée d'une série de buses de pulvérisation espacées. La rampe comprend également une ou plusieurs caméras capturant des images du champ pendant le déplacement du système, et une ou plusieurs unités de traitement capables, par des techniques de reconnaissance d'images basées sur un apprentissage, de reconnaître dans les images capturées des adventices, et de commander en temps réel les buses de pulvérisation pour appliquer un traitement, par exemple un traitement herbicide, seulement aux endroits où la présence d'adventices est détectée.

Ce système permet de réduire considérablement l'utilisation de produits phytosanitaires.

La reconnaissance des espèces à traiter s'effectue d'autant plus efficacement que les images capturées sont de bonne qualité. Ainsi des images dotées d'un contraste trop faible ou trop fort, ou encore des images sous- ou surexposées, rendent l'identification des plantes à traiter difficile.

On connaît par le document WO2007/008079A1 un système de traitement de plantes comprenant, de façon intégrée à un dispositif de pulvérisation, une caméra destinée à la reconnaissance de plantes par traitement d'images. Un double dispositif d'éclairage est associé à la caméra, avec un chevauchement des faisceaux lumineux dans la direction d'avancement de l'équipement.

La présente invention vise à permettre l'obtention d'images de qualité améliorée, pour rendre l'identification des plantes à traiter plus efficiente, et donc pour minimiser encore la consommation de produits de traitement et notamment l'impact sur l'environnement.

### Résumé de l'invention

On propose à cet effet un système pour le traitement de plantes en agriculture, comprenant une rampe de pulvérisation dotée d'une pluralité de buses de pulvérisation alimentées par un dispositif de commande de pulvérisation, l'appareil comprenant un ensemble de caméras aptes à prendre des images d'une zone de culture, un dispositif de traitement numérique apte à analyser les images prises par la caméra, à identifier des plantes à traiter et à appliquer des consignes au dispositif de commande de pulvérisation en vue de pulvériser un produit sélectivement sur des plantes à traiter, l'appareil comprenant également un agencement d'éclairage de la zone de culture capturée par les caméras, appareil caractérisé en ce que l'agencement d'éclairage comprend une pluralité de projecteurs répartis le long de la rampe et ayant des champs d'éclairement tels que chaque point d'une scène prise par une caméra reçoive de la lumière d'au moins deux projecteurs selon au moins deux orientations différentes dans un plan passant par ledit point et les projecteurs considérés.

Des aspects préférés de ce système comprennent les caractéristiques supplémentaires facultatives suivantes, prises individuellement ou en toutes combinaisons que l'homme du métier appréhendera comme étant techniquement compatibles :
* chaque projecteur est apte à générer un faisceau généralement rectangulaire, et largeur angulaire plus importante que sa hauteur angulaire.
* l'amplitude angulaire horizontale du faisceau est comprise entre environ 35 et 150°.
* l'amplitude angulaire du faisceau dans un plan vertical est comprise entre environ 3 et 60°.
* les caractéristiques d'émission des projecteurs en direction horizontale, l'orientation et leurs axes principaux sont telles qu'en parcourant une zone de travail capturée par les caméras dans une direction transversale à la direction de déplacement, la variation de la quantité de lumière reçue n'excède pas environ 30%.
* les caractéristiques d'émission des projecteurs en direction horizontale, l'orientation et leurs axes principaux sont telles qu'en parcourant une zone de travail capturée par les caméras dans une direction transversale à la direction de déplacement, la variation de la quantité de lumière reçue n'excède pas environ 20%.
* les projecteurs sont agencés en des groupes de d'éclairage aptes à engendrer des flux de lumière selon des axes principaux d'orientations différentes.
* les groupes d'éclairage sont situés au voisinage de caméras respectives.
* un flux de lumière possède un axe principal voisin de l'axe de la caméra au voisinage duquel le groupe est situé, et au moins un autre flux de lumière possède un axe principal oblique par rapport à l'axe de ladite caméra.
* deux autres flux de lumière possèdent deux axes principaux obliques par rapport à l'axe de ladite caméra.
* au moins un groupe d'éclairage comprend un ensemble de sources lumineuses et un ensemble d'optiques associées, formant autant de projecteurs.
* au moins un groupe d'éclairage comprend au moins une source lumineuse commune à deux flux, et au moins deux optiques aptes à générer au moins deux flux correspondants selon deux axes principaux différents.
* le système comprend des moyens de commande différenciée de flux lumineux d'axes principaux différents.
* les flux lumineux ont une puissance d'émission d'autant plus grande que leur axe principal est incliné par rapport aux axes de visée des caméras.
* les sources lumineuses sont des diodes électroluminescentes d'une température de couleur comprise entre environ 5000 et 6500 °K et plus particulièrement voisine de 6000 °K.
* les diodes électroluminescentes ont un indice CRI au moins égal à 70, et de préférence au moins égal à 80.
* le système comprend en outre un polariseur de lumière devant au moins certains des projecteurs, et un polariseur de lumière devant au moins certaines caméras.
* les polariseurs associés aux projecteurs et les polariseurs associés aux caméras sont des polariseurs linéaires orthogonaux.

### Brève description des dessins

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés.

Sur les dessins :
- la Figure 1 est une vue schématique de dessus, partielle, d'une rampe de pulvérisation selon une première forme de réalisation de la présente invention,
- la Figure 2 est une vue en élévation de côté, partielle, de la rampe de pulvérisation de la Figure 1, et
- la Figure 3 est une vue schématique de dessus, partielle, d'une rampe de pulvérisation selon une deuxième forme de réalisation de l'invention.

### Description détaillée de formes de réalisation préférées

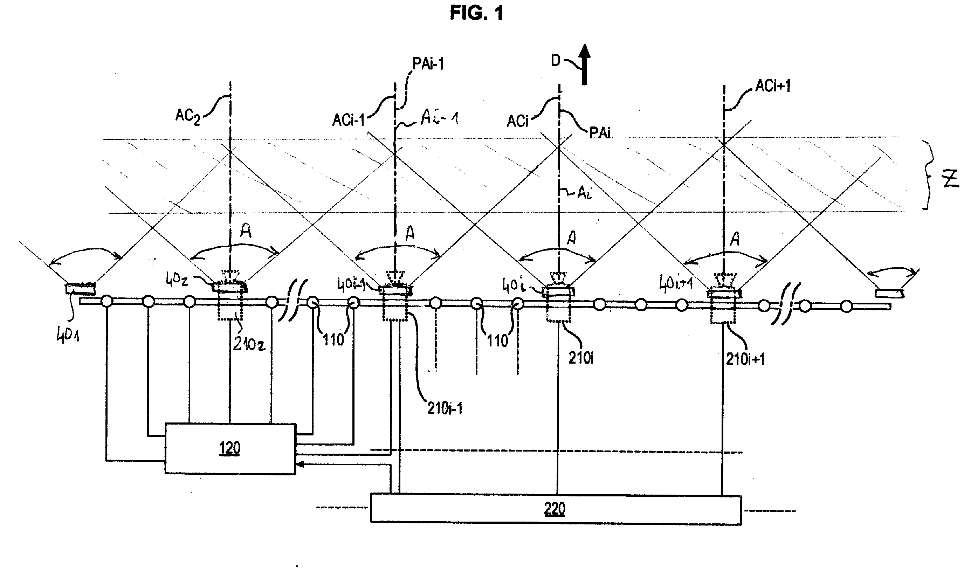

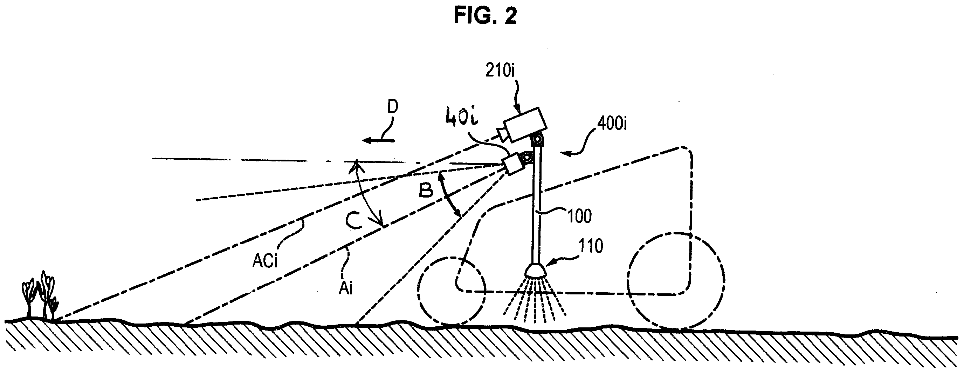

En référence aux Figures 1 et 2, on a représenté une rampe de pulvérisation qui comprend, de façon connue en soi, une structure porteuse 100 par exemple métallique, une série de buses de pulvérisation 110 de préférence régulièrement espacées le long de la rampe, chaque buse étant sélectivement alimentée par une électrovanne respective à partir d'un réservoir de produit à pulvériser, de conduites et de moyens de mise en pression, le tout de façon connue en soi, sous le contrôle d'une unité de commande de pulvérisation 120. La rampe est soit intégrée à un engin, soit tractée par un engin, soit encore portée par un engin.

De façon également connue, la rampe 100 comprend un ensemble de caméras 210i (i étant un numéro d'ordre en partant d'une extrémité de la rampe vers l'extrémité opposée et variant de 2 à n-1) dont les axes ACi sont orientés en direction plongeante dans des plans verticaux parallèles à la direction D de déplacement de l'engin et aptes à prendre des images d'un champ sur lequel se déplace rampe 100, afin d'identifier des plantes à traiter. La zone globale de prise de vues pour l'ensemble des caméras et représentée, à titre indicatif, par la zone hachurée Z.

Les plantes peuvent être des adventices sur lesquelles on souhaite sélectivement pulvériser un produit herbicide, ou encore des plantes cultivées sur lesquelles on souhaite sélectivement pulvériser un produit phytosanitaire (insecticide, engrais, régulateur de croissance, etc.).

Ces caméras 210i sont reliées à une ou plusieurs unités de traitement numérique 220 apte analyser les images prises par les caméras pour déterminer la présence de plantes cibles. Cette analyse s'effectue par exemple par décomposition de chaque image en sous-images de taille déterminée, application d'une fonction de convolution sur chacune des sous-images en utilisant des matrices de poids, et détermination d'une probabilité de présence d'une plante cible en fonction du résultat de la convolution. Le document WO2018142371A1 au nom de la demanderesse décrit de telles techniques. A chaque fois qu'une plante à traiter est localisée dans une image, sa position dans l'image permet d'en déduire sa position réelle sur la zone en cours de traitement, et l'unité de traitement 220 adresse au dispositif de commande de pulvérisation 120 une consigne pour déclencher une pulvérisation sur une buse choisie en fonction de cette position réelle, et à un instant choisi en fonction de cette position et de données d'avancement de l'engin à disposition de l'unité de traitement 220.

Selon l'invention, la rampe comprend également un dispositif d'éclairage 400 constitué dans cette première forme de réalisation d'une pluralité de projecteurs lumineux 40i destinées à éclairer les scènes prises par les caméras respectives 210. Dans le présent exemple, chaque projecteur 40i est situé au-dessous d'une caméra respective 210i et a son axe principal Ai (typiquement l'axe de symétrie du faisceau engendré) situé dans un plan vertical PAi contenant l'axe ACi de ladite caméra, en étant orienté de façon plongeante.

Chaque projecteur comprend ici un ensemble de sources lumineuses de type diodes électroluminescentes DELs montées sur un support commun, et un système optique associé (commun à l'ensemble de DELs ou individuel à chaque DEL), de telle sorte que le faisceau lumineux engendré est sensiblement plus large que haut.

La largeur du faisceau de chaque projecteur, déterminée par l'angle A, est telle que chaque emplacement de la zone à traiter située en avant de la rampe reçoit à la fois une quantité substantielle de la lumière engendrée par le projecteur le plus proche, et également une quantité substantielle de la lumière engendrée par le ou les projecteurs voisins. La valeur de l'angle A est typiquement comprise entre environ 35 et 150°, et dépend notamment du pas d'espacement des projecteurs le long de la rampe.

Par ailleurs, l'angle de plongée C de l'axe principal Ai de chaque projecteur 40i (mesuré par rapport à l'horizontale) et l'angle B couvert par le faisceau dans un plan vertical (voir Figure 2) sont choisis de manière à ce que le faisceau couvre la zone de travail Z en débordant de façon limitée au-dessus et au-dessous de cette zone.

La valeur de l'angle C est typiquement comprise entre 10 et 90° et dépend de l'angle de plongée des axes des caméras (l'angle de 90° correspondant au cas d'un travail à la verticale). La valeur de l'angle B est liée au champ de prise de vue de travail des caméras en direction verticale, à l'angle de plongée des caméras et à la distance de la zone de travail Z par rapport aux caméras, et est typiquement comprise entre 3 et 60°, et sera en générale une fraction de la valeur de l'angle A.

Comme on l'observe sur la Figure 1, dans la zone de travail Z, chaque emplacement reçoit la lumière de deux voire de trois projecteurs adjacents, avec des orientations de la lumière sensiblement différentes. En d'autres termes, chaque point d'une scène prise par une caméra 210i est éclairée d'une part par la lumière émise avec un angle relativement faible par le projecteur le plus proche 40i, et d'autre part, avec un angle plus prononcé, par les projecteurs 40i-1 et 40i+1 qui sont les voisins du projecteur 40i (et plus secondairement et de façon ici négligée, par les projecteurs plus éloignés).

Cette caractéristique d'éclairage présente deux avantages principaux.

Le premier est qu'on obtient ainsi au niveau de chaque caméra des images dont l'éclairage présente une homogénéité propice à la reconnaissance de plantes à traiter, avec un écart de luminance entre la zone frontale de la plante et ses zones latérales qui est plus bas qu'avec un simple éclairage frontal.

Le second avantage réside en ce que le cumul des luminances obtenues par la superposition des éclairages des différentes projecteurs dans la zone de travail Z varie peu lorsque l'on se déplace le long de ladite zone Z transversalement à la direction de déplacement D de la rampe. Cette variation est liée aux caractéristiques d'émission de chaque projecteur (principalement de la variation de la luminance en fonction de l'angle d'émission dans le plan plongeant perpendiculaire au plan vertical), et il est possible d'atteindre une variabilité de la luminosité inférieure à 30 %, voire à 20 %. Une variabilité similaire selon la direction de déplacement D peut être obtenue.

Il est ainsi possible de faire travailler chaque caméra non seulement avec des images non excessivement contrastées, facilitant la reconnaissance des plantes, mais également avec des images dont la luminosité varie peu, pour ainsi rester dans la zone de confort de la reconnaissance.

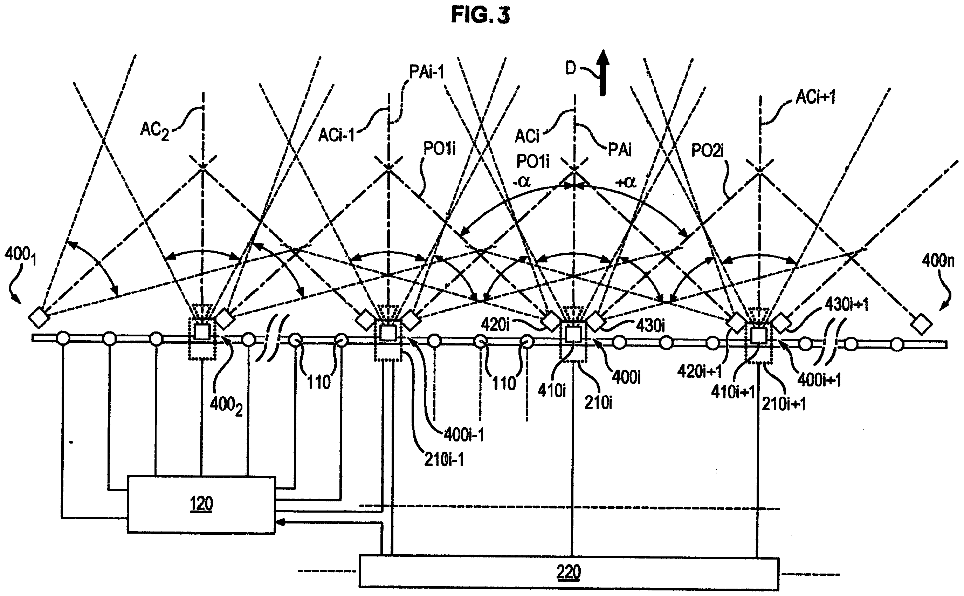

Dans une deuxième forme de réalisation illustrée sur la Figure 3 (ou des éléments ou parties identiques ou similaires à ceux de la Figure 1 sont désignés par les mêmes signes de référence), le dispositif d'éclairage comprend plusieurs groupes de sources lumineuses, ces groupes étant désignés par la référence 400i et chaque groupe de sources 400i étant situé au proche voisinage d'une caméra 210i associée. Chaque groupe (à l'exception des groupes d'extrémités de la rampe comme on le verra plus loin) comprend une source lumineuse dite axiale 410i ayant un axe principal d'éclairage plongeant Ai orienté sensiblement parallèlement à l'axe de visée de la caméra associée, et donc situé dans le plan axial PAi, et deux sources dites obliques 420i, 430i, la source 420i ayant un axe principal d'éclairage plongeant et orienté dans un plan vertical oblique PO1i faisant un angle -E avec le plan PAi, et la source 430i ayant un axe d'éclairage plongeant orienté dans un plan vertical oblique PO2i symétrique du plan PO1i par rapport au plan PAn, c'est-à-dire faisant un angle +E avec le plan PAi.

Ainsi, chaque scène prise par une caméra 210i est éclairée d'une part par la source axiale 410i située à son proche voisinage, et d'autre part par les sources obliques 430i-1 et 420i+1 situées au niveau des groupes de sources voisins 400i-1 et 400i+1 respectivement.

D'une façon plus générale, il est avantageux que les champs d'éclairement des sources soient tels que chaque scène reçoive de la lumière d'au moins deux sources lumineuses.

On obtient ainsi au niveau de la caméra des images dont l'éclairage présente une homogénéité propice à la reconnaissance de plantes à traiter, avec un écart de luminance entre la zone frontale de la plante et ses zones latérales qui est plus bas qu'avec un simple éclairage frontal.

De façon avantageuse, les sources obliques génèrent une densité lumineuse au moins égale à celle générée par la source axiale. A cet effet, les sources obliques étant en moyenne plus éloignées de la scène filmée que la source axiale (la lumière devant parcourir un trajet oblique), la puissance des sources obliques est préférentiellement plus élevée que celle des sources axiales. Le rapport entre les puissances étant lié au moins approximativement à la valeur de l'angle E.

Comme illustré sur la partie gauche de la Fig. 3, les groupes d'éclairage d'extrémités (ici 4001, 400n), où il n'y a pas de caméra, sont pourvus seulement d'une caméra oblique dans le sens rentrant, respectivement 4301 et 420n, pour l'éclairage oblique de la scène prise par la caméra immédiatement voisine (respectivement 2102 et 210n-1).

Dans le même ordre d'idée, les groupes d'éclairage 4002, 400n-1 ne comportent pas de source lumineuse dirigée vers l'extérieur puisqu'il n'existe pas de caméra de ce côté et donc aucune scène à éclairer en oblique.

Un dispositif d'éclairage selon l'invention est avantageusement utilisé en travail nocturne, mais il peut également être utilisé en complément d'un éclairage diurne faible.

Par ailleurs, lors d'un travail avec un éclairage solaire fortement latéralisé (travail en début ou en fin de journée, ou en hiver), il est possible avec la forme de réalisation de la Figure 3 de commander les sources lumineuses 410i, 420i, 430i sélectivement de façon à compenser au moins partiellement la latéralité de l'éclairage solaire. Le cas échéant, la commande des sources lumineuses peut être automatisée en fonction de la luminosité ambiante, éventuellement mesurée de façon directionnelle à l'aide de photocellules tournées dans des directions différentes (par exemple vers le haut et latéralement).

Comme on l'a indiqué précédemment, pour limiter la puissance consommée par les sources, et donc la nécessité pour l'engin d'embarquer des batteries encombrantes et lourdes, les sources sont avantageusement des diodes électroluminesentes.

On a par ailleurs observé qu'une lumière à température de couleur élevée, de préférence proche de celle de la lumière naturelle et typiquement comprise entre 5000 et 6500 °K, permettait d'obtenir une loi d'absorption/réflexion de la chlorophylle des plantes qui soit bien adaptée à l'analyse d'image.

On a observé en outre que la valeur de l'indice CRI (Color Rendering Index en terminologie anglo-saxonne) des sources LED avait un impact sur la capacité à générer des images favorables à la reconnaissance de plantes. Ainsi on utilise de façon préférée des diodes électroluminescentes ayant un indice CRI au moins égal à 70, et de préférence au moins égal à 80, révélateur d'une bonne aptitude à restituer les couleurs naturelles.

D'une façon générale, le spectre de la lumière émise par les sources peut être avantageusement adapté au spectre de sensibilité des caméras 210i et au type de détection de plantes utilisée (détection par contours où un contraste homogène est souhaitable, détection colorimétrique où il doit exister une composante significative de la lumière émise au voisinage d'un pic de réflexion ou d'absorption par la plante, etc.). Ce spectre peut également s'étendre dans le domaine invisible, lorsqu'on utilise des caméras hyperspectrales ou multispectrales.

Les sources lumineuses 410n, 420n et 430n sont soit du type à éclairage direct, soit équipés d'optiques telles que des réflecteurs et/ou des lentilles de manière à canaliser le flux lumineux dans un angle solide donné. Dans ce dernier cas, les surfaces réfléchissantes peuvent être choisies de manière à générer une densité de lumière uniforme.

Toutefois, pour le cas des sources obliques, on peut prévoir des réflecteurs asymétriques destinés à projeter une intensité lumineuse d'autant plus élevée que les points de la scène sont éloignés de la source, de manière à rendre plus homogène (entre les plantes les plus éloignées et les plantes les plus proches) la densité de lumière sur les plantes à identifier.

Bien entendu, la présente invention n'est nullement limitée aux formes de réalisation décrites et représentées, mais l'homme du métier saura y apporter de nombreuses variantes et modifications. En particulier :
- les sources lumineuses peuvent être agencées de façon groupée ou non ;
- chaque groupe de sources lumineuses peut comprendre un nombre de sources différent de trois ;
- pour définir l'axe général d'éclairage, chaque source lumineuse peut comprendre, des moyens de déviation et/ou de concentration et/ou de dispersion de la lumière ; par exemple, un groupe de sources peut comprendre une source unique, voire un groupe de sources commun, et des éléments optiques permettant générer des flux lumineux avec des axes d'éclairage dans deux ou trois directions principales, voire davantage ;

- les sources lumineuses ou leurs groupes peuvent être positionnées de façon associée à la position des caméras ou dissociée de celle-ci, selon un intervalle identique à celui des caméras ou différent ;
- on peut utiliser des combinaisons variées de sources lumineuses en termes de puissance, de spectre, de répartition de flux ;
- la nature et le spectre d'émission des sources lumineuses peut largement varier en fonction des besoins, et notamment couvrir un spectre allant au-delà du visible pour coopérer avec des caméras hyperspectrales ou multispectrales ;
- on peut équiper tout ou partie des sources lumineuses et tout ou partie des caméras de polariseurs ; ces polariseurs sont de préférence des polariseurs linéaires, d'axes orthogonaux entre les polariseurs de sources et les polariseurs (analyseurs) de caméras ; le recours à des polariseurs permet de limiter de nombreuses réflexions parasites susceptible de polluer les images et nuire à la reconnaissance des plantes ;
- dans le cas d'une rampe montée sur un tracteur, on peut prévoir des agencements de caméra(s) et/ou de projecteur(s) différents au niveau de la cabine du tracteur ; en particulier, si des caméras sont prévues sur la cabine à une hauteur plus importante que les caméras montées sur la rampe, alors le choix, le nombre et l'agencement de projecteurs peut être adapté en conséquence.

## Revendications

1. Système pour le traitement de plantes en agriculture, comprenant une rampe de pulvérisation (100) dotée d'une pluralité de buses de pulvérisation (110) alimentées par un dispositif de commande de pulvérisation (120), l'appareil comprenant un ensemble de caméras (210i) aptes à prendre des images d'une zone de culture, un dispositif de traitement numérique (220) apte à analyser les images prises par la caméra, à identifier des plantes à traiter et à appliquer des consignes au dispositif de commande de pulvérisation (120) en vue de pulvériser un produit sélectivement sur des plantes à traiter, l'appareil comprenant également un agencement d'éclairage (400) de la zone de culture capturée par les caméras, appareil **caractérisé en ce que** l'agencement d'éclairage comprend une pluralité de projecteurs (40i) répartis le long de la rampe et ayant des champs d'éclairement tels que chaque point d'une scène prise par une caméra reçoive de la lumière d'au moins deux projecteurs selon au moins deux orientations différentes dans un plan passant par ledit point et les projecteurs considérés.

2. Système selon la revendication 1, **caractérisé en ce que** chaque projecteur (40i) est apte à générer un faisceau généralement rectangulaire, et largeur angulaire plus importante que sa hauteur angulaire, l'amplitude angulaire horizontale du faisceau étant de préférence comprise entre environ 35 et 150° et l'amplitude angulaire du faisceau dans un plan vertical étant de préférence comprise entre environ 3 et 60°.

3. Système selon l'une des revendications 1 et 2, **caractérisé en ce que** les caractéristiques d'émission des projecteurs (40i) en direction horizontale, l'orientation et leurs axes principaux sont telles qu'en parcourant une zone de travail capturée par les caméras (210i) dans une direction transversale à la direction (D) de déplacement, la variation de la quantité de lumière reçue n'excède pas environ 30%, de préférence environ 20%.

4. Système selon la revendication 1, **caractérisé en ce que** les projecteurs (40i) sont agencés en des groupes de d'éclairage aptes à engendrer des flux de lumière selon des axes principaux d'orientations différentes.

5. Système selon la revendication 4, **caractérisé en ce que** les groupes d'éclairage sont situés au voisinage de caméras (210i) respectives

6. Système selon la revendication 5, **caractérisé en ce qu'**un flux de lumière possède un axe principal voisin de l'axe de la caméra au voisinage duquel le groupe est situé, et au moins un autre flux de lumière possède un axe principal oblique par rapport à l'axe de ladite caméra.

7. Système selon la revendication 6, **caractérisé en ce que** deux autres flux de lumière possèdent deux axes principaux obliques par rapport à l'axe de ladite caméra.

8. Système selon l'une des revendications 4 à 7, **caractérisé en ce qu'**au moins un groupe d'éclairage (400) comprend un ensemble de sources lumineuses et un ensemble d'optiques associées, formant autant de projecteurs.

9. Système selon l'une des revendications 4 à 7, **caractérisé en ce qu'**au moins un groupe d'éclairage comprend au moins une source lumineuse commune à deux flux, et au moins deux optiques aptes à générer au moins deux flux correspondants selon deux axes principaux différents.

10. Système selon l'une des revendications 4 à 9, **caractérisé en ce qu'**il comprend des moyens de commande différenciée de flux lumineux d'axes principaux différents.

11. Système selon l'une des revendications 4 à 10, **caractérisé en ce que** les flux lumineux ont une puissance d'émission d'autant plus grande que leur axe principal est incliné par rapport aux axes de visée des caméras (210i).

12. Système selon l'une des revendications 1 à 11, **caractérisé en ce que** les sources lumineuses sont des diodes électroluminescentes d'une température de couleur comprise entre environ 5000 et 6500 °K et plus particulièrement voisine de 6000 °K.

13. Système selon la revendication 12, **caractérisé en ce que** les diodes électroluminescentes ont un indice CRI au moins égal à 70, et de préférence au moins égal à 80.

14. Système selon l'une des revendications 1 à 13, **caractérisé en ce qu'**il comprend en outre un polariseur de lumière devant au moins certains des projecteurs, et un polariseur de lumière devant au moins certaines caméras.

15. Système selon la revendication 14, **caractérisé en ce que** les polariseurs associés aux projecteurs et les polariseurs associés aux caméras sont des polariseurs linéaires orthogonaux.

## Patentansprüche

1. System zur Behandlung von landwirtschaftlichen Pflanzen, umfassend einen Sprühbalken (100), der mit einer Vielzahl von Sprühdüsen (110) versehen ist, die von einer Sprühsteuereinheit (120) gespeist werden, wobei die Einrichtung einen Satz Kameras (210i), die in der Lage sind, Bilder von einer Anbaufläche aufzunehmen, eine digitale Verarbeitungsvorrichtung (220), die in der Lage ist, die von der Kamera aufgenommenen Bilder zu analysieren, zu behandelnde Pflanzen zu identifizieren, und Anweisungen an der Sprühsteuereinheit (120) anzuwenden, um ein Produkt selektiv auf zu behandelnde Pflanzen zu sprühen, wobei die Einrichtung ebenfalls eine Anordnung (400) zum Beleuchten der von den Kameras erfassten Anbaufläche umfasst, wobei die Einrichtung **dadurch gekennzeichnet ist, dass** die Beleuchtungsanordnung eine Vielzahl von Scheinwerfern (40i) umfasst, die entlang des Balkens verteilt sind und derartige Beleuchtungsfelder aufweisen, dass jeder Punkt einer von einer Kamera aufgenommenen Szene Licht von mindestens zwei Scheinwerfern in mindestens zwei unterschiedlichen Ausrichtungen in einer durch den Punkt und die betreffenden Scheinwerfer verlaufenden Ebene empfängt.

2. System nach Anspruch 1, **dadurch gekennzeichnet, dass** jeder Scheinwerfer (40i) in der Lage ist, einen allgemein rechteckigen Strahl und von einer Winkelbreite zu erzeugen, die größer ist als seine Winkelhöhe, wobei die horizontale Winkelamplitude des Strahls vorzugsweise im Bereich zwischen etwa 35 und 150° liegt und die Winkelamplitude des Strahls in einer vertikalen Ebene vorzugsweise im Bereich zwischen etwa 3 und 60° liegt.

3. System nach einem der Ansprüche 1 und 2, **dadurch gekennzeichnet, dass** die Abstrahlcharakteristiken der Scheinwerfer (40i) in horizontaler Richtung, die Ausrichtung und ihre Hauptachsen derart sind, dass beim Durchlaufen einer von den Kameras (210i) erfassten Arbeitsfläche in einer Richtung quer zur Bewegungsrichtung (D) die Schwankung der empfangenen Lichtmenge etwa 30 %, vorzugsweise etwa 20 %, nicht überschreitet.

4. System nach Anspruch 1, **dadurch gekennzeichnet, dass** die Scheinwerfer (40i) in Beleuchtungsgruppen angeordnet sind, die in der Lage sind, Lichtströme entlang von Hauptachsen mit unterschiedlichen Ausrichtungen zu erzeugen.

5. System nach Anspruch 4, **dadurch gekennzeichnet, dass** sich die Beleuchtungsgruppen in der Nähe jeweiliger Kameras (210i) befinden.

6. System nach Anspruch 5, **dadurch gekennzeichnet, dass** ein Lichtstrom eine Hauptachse besitzt, die der Achse der Kamera, in deren Nähe sich die Gruppe befindet, benachbart ist, und mindestens ein weiterer Lichtstrom eine Hauptachse besitzt, die in Bezug auf die Achse der Kamera schräg verläuft.

7. System nach Anspruch 6, **dadurch gekennzeichnet, dass** zwei weitere Lichtströme zwei Hauptachsen besitzen, die in Bezug auf die Achse der Kamera schräg verlaufen.

8. System nach einem der Ansprüche 4 bis 7, **dadurch gekennzeichnet, dass** mindestens eine Beleuchtungsgruppe (400) einen Satz Lichtquellen und einen Satz zugehöriger Optiken umfasst, die ebenso viele Scheinwerfer bilden.

9. System nach einem der Ansprüche 4 bis 7, **dadurch gekennzeichnet, dass** mindestens eine Beleuchtungsgruppe mindestens eine gemeinsame Lichtquelle für zwei Ströme und mindestens zwei Optiken umfasst, die in der Lage sind, mindestens zwei entsprechende Ströme entlang von zwei unterschiedlichen Hauptachsen zu erzeugen.

10. System nach einem der Ansprüche 4 bis 9, **dadurch gekennzeichnet, dass** es Mittel zur differenzierten Steuerung von Lichtströmen mit unterschiedlichen Hauptachsen umfasst.

11. System nach einem der Ansprüche 4 bis 10, **dadurch gekennzeichnet, dass** die Lichtströme eine Abstrahlleistung aufweisen, die umso größer ist, je stärker ihre Hauptachse in Bezug auf die Zielachsen der Kameras (210i) geneigt ist.

12. System nach einem der Ansprüche 1 bis 11, **dadurch gekennzeichnet, dass** die Lichtquellen Leuchtdioden mit einer Farbtemperatur im Bereich zwischen etwa 5000 und 6500 °K, und insbesondere nahe 6000 °K, sind.

13. System nach Anspruch 12, **dadurch gekennzeichnet, dass** die Leuchtdioden einen CRI-Wert von mindestens gleich 70, und vorzugsweise mindestens gleich 80, aufweisen.

14. System nach einem der Ansprüche 1 bis 13, **dadurch gekennzeichnet, dass** es weiter einen Lichtpolarisator vor mindestens einigen der Scheinwerfer, und einen Lichtpolarisator vor mindestens einigen Kameras umfasst.

15. System nach Anspruch 14, **dadurch gekennzeichnet, dass** die zu den Projektoren gehörenden Polarisatoren und die zu den Kameras gehörenden Polarisatoren orthogonale lineare Polarisatoren sind.

## Claims

1. System for treating plants in agriculture, comprising a spray boom (100) provided with a plurality of spray nozzles (110) supplied by a spray control device (120), the apparatus comprising a set of cameras (210i) capable of capturing images of a crop area, a digital processing device (220) capable of analyzing the images captured by the camera, of identifying plants to be treated and of sending commands to the spray control device (120) for the purpose of selectively spraying a product on plants to be treated, the apparatus further comprising an arrangement (400) for lighting the crop area captured by the cameras, said apparatus being **characterized in that** the lighting arrangement comprises a plurality of projectors (40i) distributed along the boom and having fields of illumination such that each point of a scene captured by a camera receives light from at least two projectors along at least two different orientations in a plane passing through said point and the considered projectors.

2. System according to claim 1, **characterized in that** each projector (40i) is capable of generating a beam which is generally rectangular with an angular width greater than its angular height, the horizontal angular amplitude of the beam being preferably comprised between around 35 and 150° and the angular amplitude of the beam in a vertical plane being preferably comprise between around 3 and 60°.

3. System according to one of claims 1 and 2, **characterized in that** the illumination characteristics of the projectors (40i) in a horizontal direction, their orientation and their main axes are such that, running through a work zone captured by the cameras (210i) in a direction transverse to the movement direction (D), the variation in the quantity of light received does not exceed around 30%, preferably approximately 20%.

4. System according to claim 1, **characterized in that** the projectors (40i) are arranged in lighting groups capable of creating light fluxes according to main axes of different orientations.

5. System according to claim 4, **characterized in that** the lighting groups are located in the vicinity of respective cameras (210i).

6. System according to claim 5, **characterized in that** a light flux has a main axis neighboring the axis of the camera in the vicinity of which the group is located, and at least one other light flux has a main axis that is oblique with respect to the axis of said camera.

7. System according to claim 6, **characterized in that** two other light fluxes have two main axes which are oblique with respect to the axis of said camera.

8. System according to one of claims 4 to 7, **characterized in that** at least one lighting group (400) comprises a set of light sources and a set of associated optics, forming as many projectors.

9. System according to one of claims 4 to 7, **characterized in** at least one lighting group comprises at least one light source that is common to two fluxes, and at least two optics capable of generating at least two corresponding fluxes according to two different main axes.

10. System according to one of claims 4 to 9, **characterized in that** it comprises means for differentiated control of light fluxes having different main axes.

11. System according to one of claims 4 to 10, **characterized in that** the more the main axes of the light fluxes are inclined respective to the viewing axes of the cameras (210i), the greater their lighting power is.

12. System according to one of claims 1 to 11, **characterized in that** the light sources are light-emitting diodes having a color temperature of between approximately 5000 and 6500°K, and more particularly close to 6000°K.

13. System according to claim 12, **characterized in that** the light-emitting diodes have a CRI index at least equal to 70, and preferably at least equal to 80.

14. System according to one of claims 1 to 13, **characterized in that** it further comprises a light polarizer in front of at least some of the projectors, and a light polarizer in front of at least some cameras.

15. System according to claim 14, **characterized in that** the polarizers associated to the projectors and the polarizers associated to the cameras are orthogonal linear polarizers.
